# EUROPEAN PATENT APPLICATION

(11) **EP 0 799 563 A1**
(43) Date of publication of application: **08.10.1997**
(21) Application number: 97302349.2
(22) Date of filing: 04.04.1997
(51) Int. Cl.: A01G 13/10

(54) **A shelter**

(30) Priority: 04.04.1996 GB 9607107
(71) Applicant: DAVID S. SMITH PACKAGING LIMITED, London SW1P 2BX (GB)
(72) Inventor: Haines, Clive Peter, Gloucester, Gloucestershire GL19 3AQ (GB)
(74) Representative: Johnson, Terence Leslie

(57) **Abstract**

A shelter 1 for a growing plant, usually called a tree shelter, which is formed from a single blank of plastic material which has formed therein fold or crease lines 2-8 by any suitable means, for example by welding. The crease lines extend transversely of flutes which are an integral part of the material, which is suitably that sold under the registered trade mark "CORREX". The crease lines 2-8 are positioned in the blank so that when folded about them, a substantially square internal growing area 9 (in which the young tree (not shown) is situated in use), is formed, parts 10, 11 and 12, 13 of the shelter 1 being overlapped to form a pocket 14 at a corner 'C' of substantially triangular configuration for receiving an elongate support member such as a wooden stake which is inserted in the ground to support the shelter. The overlapped parts 10, 11 and 12, 13 are secured together where they contact by any suitable means, such as for example welding 8, the arrangement of particular hinge lines 6, 7, 8 being such that a base of the triangle is formed by an intermediate part 15 bearing an intermediate hinge line 7, of the flap 11, 13.

## Description

The invention relates to a shelter, particularly to such a shelter as is used to protect a growing plant such as a young tree, from the elements and depradation of animals, such as rabbits, deer, etc.

Such shelters are often made from a folded blank of plastic material, which is folded in such a way as to provide a pocket for a support element such as a wooden stake. The provision of such pockets usually means that a superfluity of material is required in the blank, which can thus be expensive.

It is accordingly an object of the invention to seek to mitigate this disadvantage.

According to first aspect of the invention there is provided a blank for forming a shelter for a growing plant having folds arranged to form, when the shelter is assembled, a pocket for an elongate support element remote from a growing area and at a corner of the assembled shelter.

According to a second aspect of the invention there is provided a shelter for a growing plant, comprising a pocket for an elongate support element remote from a growing area thereof, the pocket being at a corner of the shelter.

The pocket may be formed by two overlapped parts of material forming the shelter. This provides for ease of construction.

The overlapped parts may be spaced for forming a pocket of substantially triangular configuration.

This provides for ease of insertion of an elongate support member.

One part may comprise a base of the triangle and may have a fold line therein. This is a construction which provides for collapsing of the shelter, particularly where the fold line provides for flexing of the part into the pocket.

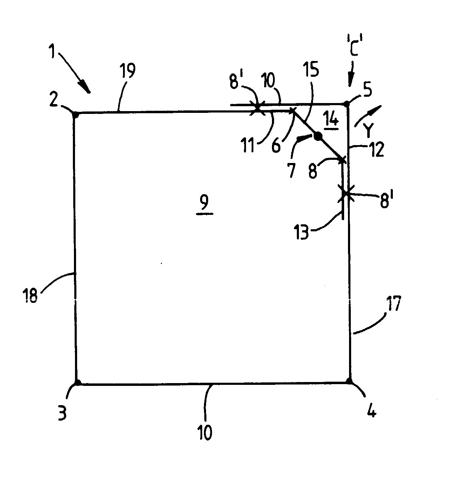

A tree shelter embodying the invention is hereinafter described, by way of example, with reference to the accompanying drawing, which shows schematically a plan view of a tree shelter according to the invention.

Referring to the drawing there is shown a shelter 1 for a growing plant, usually called a tree shelter, which is formed from a single blank of plastic material which has formed therein fold or crease lines 2-8 by any suitable means, for example by welding. The crease lines extend transversely of flutes which are an integral part of the material, which is suitably that sold under the registered trade mark "CORREX". The crease lines 2-8 are positioned in the blank so that when folded about them, a substantially square internal growing area 9 (in which the young tree (not shown) is situated in use), is formed, parts 10, 11 and 12, 13 of the shelter 1 being overlapped to form a pocket 14 at a corner 'C' of substantially triangular configuration for receiving an elongate support member such as a wooden stake which is inserted in the ground to support the shelter. The overlapped parts 10, 11 and 12, 13 are secured together where they contact by any suitable means, such as for example welding 8', the arrangement of particular hinge lines 6, 7, 8 being such that a base of the triangle is formed by an intermediate part 15 bearing an intermediate hinge line 7, of the flap 11, 13.

The overlapped parts are secured from the hinge line 6 to the left as viewed, and from the hinge line 8 downwardly as viewed, so the part 15 is free to flex about the lines 6, 7 and 8.

The hinge line 7 is such that the intermediate part 15 tends to flex into the pocket 14 flexing taking place reciprocally in the direction of the arrow 'Y' to erect or collapse the tree shelter. Not only does this enable the tree shelter 1 to be collapsed for storage and transport so that sides 16, 17, 18 and 19 lie substantially parallel, but when erected the apex at the line 7 can bear on the elongate support member such as a stake (not shown) and help to hold it positively in position, thereby holding the shelter upright in use.

The arrangement of the corner pocket 14 also means that less material is used in the blank than hitherto, thereby saving expense.

It will be understood that the elongate support member, usually a wooden stake, may be generally triangular in cross section, so that it is complementary to, and a sliding fit in, the pocket 14. Also, the weld 8' may comprise a series of spot welds spaced apart over the length of the assembled tree shelter. or each may be a continuous weld extending over the length of, or substantially over the length of, the assembled tree shelter.

Thus, a tree shelter embodying the invention as shown in the drawing comprises a growing area and a pocket for receiving an elongate support member such as a shelter, the shelter being formed from a substantially flat sheet or blank of material and having spaced hinge or fold lines whereabout the sheet or blank is foldable to form panels defining the growing area and pocket, one edge of the blank being secured by securing means at an inner surface of one panel and by an edge of the blank opposite thereto being secured by securing means at an outer surface of a second panel, such that two panels overlap and are spaced apart to define the pocket, which is of generally triangular shape and positioned at a corner of an assembled tree shelter. This provides a neat shelter which has an overall compact construction as the corner pocket does not essentially increase the width of the assembled shelter, while providing two adjacent sides i.e. sides at right angles, this provides for stability, and support to provide a square or unimpeded growing area within the tree shelter.

## Claims

1. A blank for forming a shelter for a growing plant, having folds arranged to form when the shelter is assembled, characterised by the folds providing a pocket (14) for an elongate support element remote from a growing area (9) and at a corner 'C' of the assembled shelter.

2. A shelter for a growing plant, characterised by a pocket (14) for an elongate support element remote from a growing area (9) thereof, and by the pocket (14) being at a corner 'C' of the shelter.

3. A shelter according to Claim 2, characterised by the pocket (14) being formed by two overlapped parts (10,11) and (12,13) of material forming the shelter.

4. A shelter according to Claim 3, characterised by the overlapped parts (10,11) and (12,13) being spaced for forming a pocket (14) of substantially triangular configuration.

5. A shelter according to Claim 4, characterised by one part comprising a base (15) of the triangle and having at least one fold line (7) therein.

6. A shelter according to Claim 5, characterised by the fold line (7) providing for flexing of the part (15) into the pocket (14).

7. A blank or shelter according to any of the preceding claims, characterised by being formed of an extruded plastic material.
